# EUROPEAN PATENT APPLICATION

(11) **EP 4 644 716 A1**
(43) Date of publication of application: **05.11.2025**
(21) Application number: 23931819.9
(22) Date of filing: 07.12.2023
(51) Int. Cl.: F16C 11/04, H04M 1/02, E05D 11/10

(54) **HINGE APPARATUS AND ELECTRONIC DEVICE**

(30) Priority: 03.04.2023 CN 202310388699
(71) Applicant: Honor Device Co., Ltd., Shenzhen, Guangdong 518040 (CN)
(72) Inventor: DONG, Shaohong, Shenzhen, Guangdong 518040 (CN); JIN, Kaifang, Shenzhen, Guangdong 518040 (CN); CHEN, Ruihao, Shenzhen, Guangdong 518040 (CN)
(74) Representative: Isarpatent
(86) International application number: PCT/CN2023/137266
(87) International publication number: WO 2024/207774

(57) **Abstract**

Embodiments of this application provide a hinge apparatus and an electronic device. The hinge apparatus includes a shaft cover and a swing arm assembly. The swing arm assembly includes a transmission shaft rotatably connected to the shaft cover, a swing arm connected to the transmission shaft, and a damping component. The swing arm includes a pushing member. The damping component includes a guide slidable member, a friction damping member, and a first elastic member. The pushing member abuts against the guide slidable member. Both the guide slidable member and the friction damping member are slideably connected to the transmission shaft in an axial direction of the transmission shaft. The friction damping member is in contact with the guide slidable member. The first elastic member is disposed, in the axial direction of the transmission shaft, on a side of the friction damping member facing away from the guide slidable member. The first elastic member is configured to apply force that is directed toward the guide slidable member to the friction damping member. When the swing arm rotates, the swing arm, the transmission shaft, and the friction damping member synchronously rotate relative to the shaft cover, and the pushing member pushes or releases the guide slidable member, so that the guide slidable member and the friction damping member synchronously slide in the axial direction of the transmission shaft, and the friction damping member rotates relative to the guide slidable member.

## Description

This application claims priority to Chinese Patent Application No. 202310388699.2, filed with the China National Intellectual Property Administration on April 3, 2023 and entitled "HINGE APPARATUS AND ELECTRONIC DEVICE", which is incorporated herein by reference in its entirety.

### TECHNICAL FIELD

This application relates to the field of terminal technologies, and in particular, to a hinge apparatus and an electronic device.

### BACKGROUND

A display screen of an electronic device is configured to present image information to a user. In some usage scenarios, the user expects that the display screen of the electronic device can have a larger display area. Currently, the electronic device uses a single screen for display. A larger display area indicates a larger size of the electronic device, resulting in loss of portability of the electronic device.

With development of flexible display screen technologies, the electronic device may use a foldable structure to balance the size and the display area of the electronic device. For example, two frames may rotate relative to each other about a hinge apparatus to be unfolded or folded. The two frames are covered by a flexible display screen. When the two frames are unfolded to a same plane, the flexible display screen is in an unfolded state and has a large display area. When the two frames are folded together, the flexible display screen is in a folded state, and a size of the electronic device is small. However, during unfolding or folding the electronic device, damping force in a rotation process of a frame is small, resulting in a poor damping feel during unfolding or folding the frame, leading to poor user experience of the electronic device.

### SUMMARY

Embodiments of this application provide a hinge apparatus and an electronic device, which can be beneficial for a frame to maintain a good damping feel, and also facilitate a miniaturization design of the hinge apparatus.

According to a first aspect, this application provides a hinge apparatus, including a shaft cover and a swing arm assembly.

The swing arm assembly includes a transmission shaft, a swing arm, and a damping component. The transmission shaft is rotatably connected to the shaft cover. The swing arm is connected to the transmission shaft. The swing arm includes a pushing member. The damping component includes a guide slidable member, a friction damping member, and a first elastic member. The pushing member abuts against the guide slidable member. Both the guide slidable member and the friction damping member are slideably connected to the transmission shaft in an axial direction of the transmission shaft. The friction damping member is in contact with the guide slidable member. The first elastic member is disposed, in the axial direction of the transmission shaft, on a side of the friction damping member facing away from the guide slidable member. The first elastic member is configured to apply force that is directed toward the guide slidable member to the friction damping member.

When the swing arm rotates, the swing arm, the transmission shaft, and the friction damping member synchronously rotate relative to the shaft cover, and the pushing member pushes or releases the guide slidable member, so that the guide slidable member and the friction damping member synchronously slide in the axial direction of the transmission shaft, and the friction damping member rotates relative to the guide slidable member.

In an electronic device of this embodiment of this application, the swing arm, the transmission shaft, and the friction damping member may be linked, so that the swing arm, the transmission shaft, and the friction damping member can synchronously rotate relative to the shaft cover. The guide slidable member can slide along the transmission shaft, but cannot rotate relative to the transmission shaft. Therefore, when a torque is applied to a frame connected to the swing arm, corresponding damping force may be generated between the pushing member of the swing arm and the guide slidable member and between the friction damping member and the guide slidable member due to relative rotation, so that the hinge apparatus can generate large damping force, to provide sufficiently large damping force to the frame, so that unfolding or folding of the frame can be kept smooth and a rotation speed is uniform. This can maintain a good damping feel for the frame, to help improve satisfaction of use experience of the electronic device. Alternatively, when it is ensured that a magnitude of damping force provided by the hinge apparatus to the frame remains unchanged, sizes of the pushing member and the guide slidable member may be reduced. This facilitates a miniaturization design of the hinge apparatus.

In a possible implementation, friction damping members, guide slidable members, and pushing members are respectively disposed on two opposite sides of the first elastic member in the axial direction of the transmission shaft.

Friction force may be generated between the friction damping members and the guide slidable members on the both two opposite sides of the first elastic member may both generate friction force, to further increase damping force when the swing arm swings, so as to increase damping force of the frame. Alternatively, when it is ensured that damping force of the frame remains unchanged, sizes of the pushing member and the guide slidable member may be further reduced. This facilitates a miniaturization design of the hinge apparatus.

In a possible implementation, the damping component further includes a limiting stop member. The limiting stop member is slideably connected to the transmission shaft in the axial direction of the transmission shaft. The limiting stop member is disposed between the guide slidable member and the first elastic member. The friction damping member is disposed on a side of the limiting stop member facing the guide slidable member. The friction damping member is in contact with the limiting stop member. When the swing arm rotates, the guide slidable member, the friction damping member, and the limiting stop member synchronously slide along the transmission shaft, and the friction damping member rotates relative to the guide slidable member and the limiting stop member.

When the friction damping member slides in the axial direction of the transmission shaft, the friction damping member also rotates relative to the limiting stop member, so that friction force exists between the friction damping member and the limiting stop member, in other words, damping force may also be generated between the friction damping member and the limiting stop member, to further increase damping force of the swing arm. Alternatively, when it is ensured that a magnitude of damping force provided by the hinge apparatus to the frame remains unchanged, sizes of the pushing member and the guide slidable member may be reduced. This facilitates a miniaturization design of the hinge apparatus.

In a possible implementation, the friction damping member and the limiting stop member are disposed on at least one side of the first elastic member in the axial direction of the transmission shaft.

In a possible implementation, at least two friction damping members are disposed on at least one side of the first elastic member in the axial direction of the transmission shaft. The friction damping members and limiting stop members located on a same side of the first elastic member are alternately disposed.

In a possible implementation, swing arm assemblies are respectively disposed on two opposite sides of the shaft cover. The hinge apparatus further includes a first connection member. The limiting stop members located on the same side of the first elastic member are connected by using the first connection member in the axial direction of the transmission shaft.

The first connection member restricts the limiting stop member, so that when the pushing member, the transmission shaft, and the friction damping member synchronously rotate, the friction damping member rotates relative to the limiting stop member, but the limiting stop member does not rotate with the transmission shaft, and the limiting stop member and the first connection member move only along the transmission shaft.

In a possible implementation, the damping component further includes a second elastic member. The first connection member is disposed, in the axial direction of the transmission shaft, on a side of the second elastic member facing the guide slidable member. The first elastic member and the second elastic member are configured to apply force that is directed toward the guide slidable member to the limiting stop member.

The second elastic member may help further increase friction force between the friction damping member and the limiting stop member, so that larger damping force is generated between the friction damping member and the limiting stop member. The second elastic member may also help further increase friction force between the friction damping member and the guide slidable member, so that larger damping force is generated between the friction damping member and the guide slidable member.

In a possible implementation, the damping component further includes a guide shaft. The guide shaft is connected to the guide slidable member. The second elastic member is looped around the guide shaft.

The guide shaft may provide a guide function for the second elastic member, and may effectively prevent the second elastic member from falling off between two first connection members.

In a possible implementation, friction damping members, limiting stop members, guide slidable members, and pushing members are respectively disposed on two opposite sides of the first elastic member in the axial direction of the transmission shaft. The hinge apparatus further includes a second connection member. Guide slidable members located on a same side of the first elastic member are connected by using the second connection member in the axial direction of the transmission shaft. The second connection member located on a side of the second elastic member is connected to the guide shaft. The second connection member located on the other side of the second elastic member is slideably connected to the guide shaft.

In a possible implementation, a surface of the friction damping member that is in contact with the limiting stop member is a flat surface.

When the friction damping member rotates relative to the limiting stop member, the friction damping member does not slide in the axial direction of the transmission shaft under a limiting constraint of the limiting stop member. This helps ensure smooth rotation of the friction damping member.

In a possible implementation, the friction damping member includes a friction plate. The friction plate is easy to be processed and manufactured and occupies little space. The limiting stop member includes a limiting stop plate. The limiting stop plate is easy to be processed and manufactured and occupies little space.

In a possible implementation, the guide slidable member and the friction damping member are both sleeved on the transmission shaft.

The transmission shaft passes through the guide slidable member and the friction damping member, so that the guide slidable member and the friction damping member are unlikely to fall off from the transmission shaft.

In a possible implementation, the guide slidable member includes an avoidance circular hole. The friction damping member includes a strip-shaped limiting hole. The transmission shaft passes through the avoidance circular hole and the strip-shaped limiting hole. A cross-section shape of the transmission shaft matches a cross-sectional shape of the strip-shaped limiting hole.

In a possible implementation, both a surface of the friction damping member and a surface of the guide slidable member that are in contact with each other are flat surfaces.

When the friction damping member rotates relative to the guide slidable member, the friction damping member does not slide in the axial direction of the transmission shaft under a limiting constraint of the guide slidable member. This helps ensure smooth rotation of the friction damping member.

In a possible implementation, the pushing member is a pushing cam. The guide slidable member is a guide cam. The pushing member is disposed, in the axial direction of the transmission shaft, facing the guide slidable member.

In a possible implementation, swing arm assemblies are respectively disposed on two opposite sides of the shaft cover. The hinge apparatus further includes a second connection member. Guide slidable members located on a same side of the first elastic member are connected by using the second connection member in the axial direction of the transmission shaft.

The second connection member constrains the guide slidable member, so that when the pushing member and the transmission shaft synchronously rotate, the pushing member rotates relative to the guide slidable member, but the guide slidable member does not rotate with the transmission shaft. A structure formed by the guide slidable member and the second connection member may enable the swing arms at the two sides of the shaft cover to synchronously swing. In other words, only when the swing arms at the two sides of the shaft cover are forced to swing at the same time, the guide slidable member may be pushed against or released by the pushing member, and the guide slidable member and the second connection member synchronously move in the axial direction of the transmission shaft.

In a possible implementation, the damping component further includes a second elastic member. The second connection member is disposed, in the axial direction of the transmission shaft, on a side of the second elastic member facing the guide slidable member. The first elastic member and the second elastic member are configured to apply force that is directed toward the pushing member to the guide slidable member.

According to a second aspect, this application provides an electronic device, including the foregoing hinge apparatus.

The hinge apparatus includes a shaft cover and a swing arm assembly. The swing arm assembly includes a transmission shaft, a swing arm, and a damping component. The transmission shaft is rotatably connected to the shaft cover. The swing arm is connected to the transmission shaft. The swing arm includes a pushing member. The damping component includes a guide slidable member, a friction damping member, and a first elastic member. The pushing member abuts against the guide slidable member. Both the guide slidable member and the friction damping member are slideably connected to the transmission shaft in an axial direction of the transmission shaft. The friction damping member is in contact with the guide slidable member. The first elastic member is disposed, in the axial direction of the transmission shaft, on a side of the friction damping member facing away from the guide slidable member. The first elastic member is configured to apply force that is directed toward the guide slidable member to the friction damping member.

When the swing arm rotates, the swing arm, the transmission shaft, and the friction damping member synchronously rotate relative to the shaft cover, and the pushing member pushes or releases the guide slidable member, so that the guide slidable member and the friction damping member synchronously slide in the axial direction of the transmission shaft, and the friction damping member rotates relative to the guide slidable member.

### BRIEF DESCRIPTION OF DRAWINGS

FIG. 1 is a schematic diagram of a structure of an electronic device in an unfolded state according to an embodiment of this application;
FIG. 2 is a schematic diagram of a structure of an electronic device in a semi-folded state according to an embodiment of this application;
FIG. 3 is a schematic diagram of a structure of an electronic device in a folded state according to an embodiment of this application;
FIG. 4 is a schematic diagram of a partial exploded structure of an electronic device according to an embodiment of this application;
FIG. 5 is a schematic diagram of a partial structure of a hinge apparatus according to an embodiment of this application;
FIG. 6 is a schematic diagram of a partial structure of a hinge apparatus according to an embodiment of this application;
FIG. 7 is an enlarged schematic diagram of a part M in FIG. 5;
FIG. 8 is a schematic diagram of a partial structure of a hinge apparatus according to an embodiment of this application;
FIG. 9 is an enlarged schematic diagram of a part W in FIG. 6;
FIG. 10 is a schematic diagram of a structure of a friction damping member according to an embodiment of this application;
FIG. 11 is a schematic diagram of a partial structure of a hinge apparatus according to another embodiment of this application;
FIG. 12 is an enlarged schematic diagram of a part K in FIG. 11;
FIG. 13 is a schematic diagram of a partial structure of a hinge apparatus according to another embodiment of this application;
FIG. 14 is a schematic diagram of a structure of limiting stop members and a first connection member according to an embodiment of this application;
FIG. 15 is a schematic diagram of a partial structure of a hinge apparatus according to another embodiment of this application;
FIG. 16 is a schematic diagram of a partial structure of a hinge apparatus according to another embodiment of this application;
FIG. 17 is a schematic diagram of a structure of limiting stop members and a first connection member according to another embodiment of this application; and
FIG. 18 is a schematic diagram of a partial structure of a hinge apparatus according to still another embodiment of this application.

### Reference numerals:

10. Electronic device;
20. Housing;
30. Flexible display screen; 31. First display region; 32. Second display region; 33. Third display region;
40. Frame;
50. Hinge apparatus;
51. Shaft cover;
52. Swing arm assembly;
521. Transmission shaft;
522. Swing arm; 5221. Pushing member;
523. Damping component;
5231. Guide slidable member; 5232. Friction damping member; 5232a. Limiting hole; 5233. First elastic member; 5234. Limiting stop member; 5234a. Circular hole; 5235. Second elastic member;
53. Shaft base;
54. First connection member; 541. Shaft hole;
55. Second connection member;
56. Guide shaft;
60. Engaging protrusion;
X. Axial direction;
Y. Width direction.

### DESCRIPTION OF EMBODIMENTS

An electronic device in embodiments of this application may be referred to as user equipment (user equipment, UE), a terminal (terminal), or the like. For example, the electronic device may be a mobile terminal such as a tablet computer (portable Android device, PAD), a personal digital assistant (personal digital assistant, PDA), a handheld device having a wireless communication function, a computing device, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home), or a fixed terminal. A form of the terminal device is not specifically limited in embodiments of this application.

In an embodiment of this application, an example in which the electronic device is a handheld device having a wireless communication function is used for description. The handheld device having a wireless communication function may be, for example, a foldable-screen device. The foldable-screen device may be a foldable mobile phone including a foldable flexible display screen.

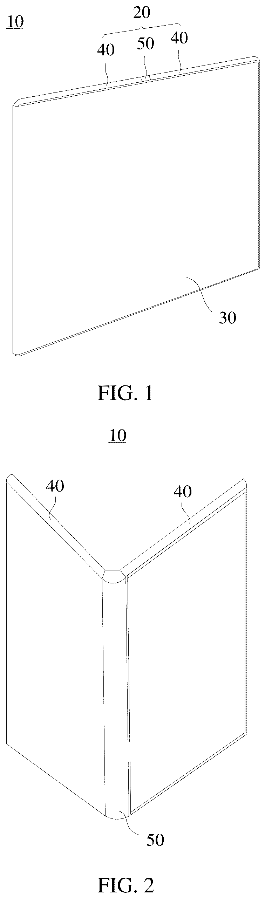

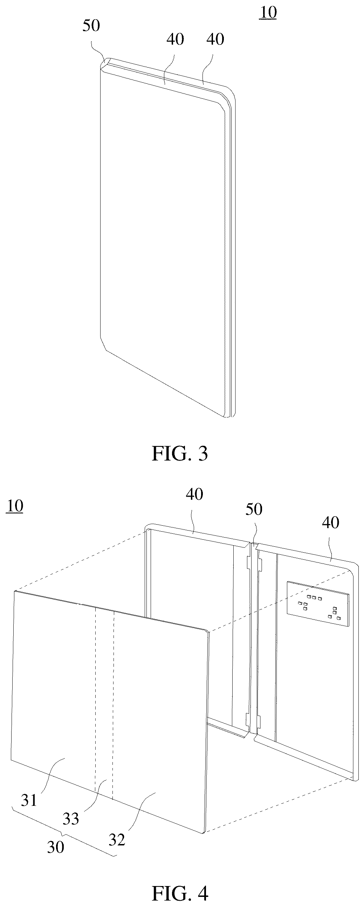

FIG. 1 schematically shows a structure of an electronic device 10 in an unfolded state. FIG. 2 schematically shows a structure of the electronic device 10 in a semi-folded state. FIG. 3 schematically shows a structure of the electronic device 10 in a folded state. Refer to FIG. 1 to FIG. 3. The electronic device 10 includes a housing 20 and a flexible display screen 30. The housing 20 includes frames 40 and a hinge apparatus 50. The frames 40 are connected to the hinge apparatus 50. The frames 40 may be respectively disposed on two opposite sides of the hinge apparatus 50. The flexible display screen 30 is connected to the frame 40.

The frames 40 are rotatable relative to the hinge apparatus 50 to be folded. In this application, an example in which the electronic device 10 includes two frames 40 is used for description. When the two frames 40 are stacked, the electronic device 10 is in a folded state. When the two frames 40 in a stacked state move away from each other and are unfolded to a same plane, the electronic device 10 is in an unfolded state. A process in which the frames 40 change from a folded state to an unfolded state is an unfolding process, and a process in which the frames 40 change from the unfolded state to the folded state is a folding process.

In some implementations, the frames 40 may include middle frames. The frames 40 may be connected to the hinge apparatus 50 via the middle frames.

FIG. 4 schematically shows a partial exploded structure of the electronic device 10. Refer to FIG. 4. The flexible display screen 30 includes a display part for displaying image information. The flexible display screen 30 is bendable and may be folded under external force. When the electronic device 10 is in the unfolded state, the display part of the flexible display screen 30 is unfolded to present the image information to a user. The display part may include a first display region 31, a second display region 32, and a third display region 33. The first display region 31 and the second display region 32 are arranged respectively corresponding to the two frames 40. The third display region 33 may be arranged corresponding to the hinge apparatus 50.

When the two frames 40 are in the folded state, the display part is in a bent state. The first display region 31 and the second display region 32 of the display part may be stacked, and the third display region 33 may be bent into an arc state.

When the two frames 40 are in the unfolded state, the display part is in an unfolded state, and the first display region 31, the second display region 32, and the third display region 33 are in a flat state. An overall size of the electronic device 10 may be changed through folding or unfolding, and there may be a large display area in the unfolded state.

Electronic components may be provided respectively in each of the two frames 40 of the electronic device 10, for example, the electronic components may include but are not limited to a processor, a memory, or a camera module. In some examples, a main board is disposed in the frame 40. The electronic components are disposed on the main board. The main board may be a printed circuit board (Printed Circuit Board, PCB).

In the related technology, the hinge apparatus 50 needs to provide sufficiently large damping force to the frame 40, so that unfolding or folding of the frame 40 can be kept smooth and a rotation speed is uniform. This can maintain a good damping feel for the frame 40, to improve satisfaction of use experience of the electronic device 10. However, the electronic device 10 of a slim and lightweight design is pursued, so that an entire size of the hinge apparatus 50 also tends to be of a miniaturization design. Consequently, a size of a structure that is in the hinge apparatus 50 and that is configured to generate damping force is reduced. As a result, the damping force provided by the hinge apparatus 50 for the frame 40 is reduced. Consequently, the unfolding or folding of the frame 40 is unlikely to be smoothed, the rotation speed is relatively not uniform, and a damping feel for the frame 40 is poor, affecting satisfaction of use experience of the electronic device 10.

In the electronic device 10 provided in this embodiment of this application, the hinge apparatus 50 may provide the sufficiently large damping force to the frame 40 by using the pushing member, the guide slidable member, and the friction damping member in cooperation with each other. In this way, when the electronic device 10 is of a lightweight design, a good damping feel for the frame 40 is maintained, to improve the satisfaction of the use experience of the electronic device 10.

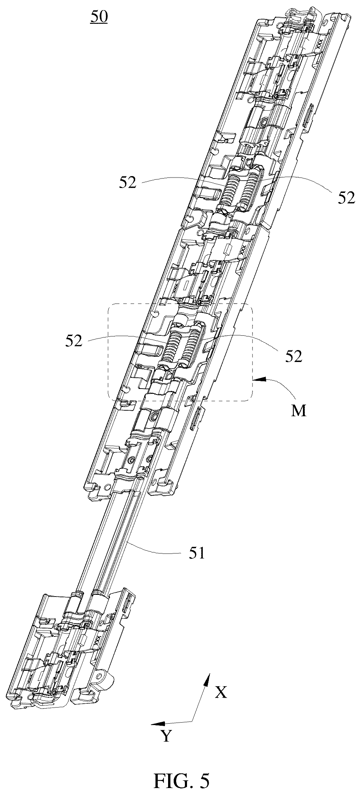

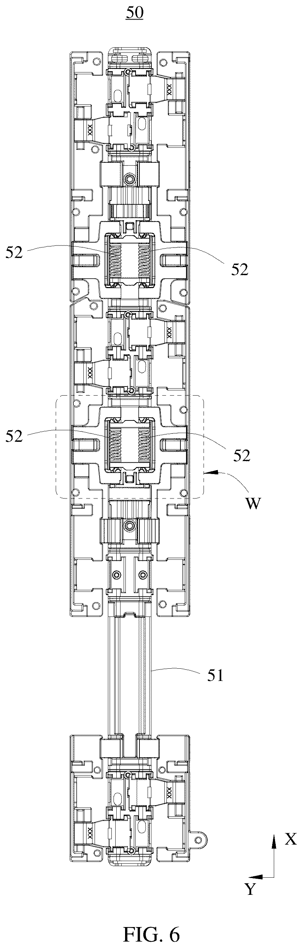

FIG. 5 schematically shows a partial structure of the hinge apparatus 50. FIG. 6 schematically shows a partial structure of the hinge apparatus 50. Refer to FIG. 4, FIG. 5, and FIG. 6. The hinge apparatus 50 in this embodiment of this application includes a shaft cover 51. The shaft cover 51 may be located between the two frames 40. The shaft cover 51 may cover another structural part on the hinge apparatus 50, so that the electronic device 10 has a trim and aesthetic appearance. When the two frames 40 rotate relative to the hinge apparatus 50, a position of the shaft cover 51 may remain relatively fixed. In some examples, when the two frames 40 are in the unfolded state, the two frames 40 may cover the shaft cover 51, so that the shaft cover 51 is in a concealed state. When the two frames 40 are in the folded state, at least part of the shaft cover 51 may be exposed out of the two frames 40 to be in a visible state. The shaft cover 51 can provide a mounting base for related structural parts of the hinge apparatus 50.

In some examples, the shaft cover 51 may be a strip-shaped structure. For example, the frames 40 are respectively disposed on two sides of the shaft cover 51 in a width direction Y of the shaft cover 51. The shaft cover 51 includes an accommodating recess. In the electronic device 10, the accommodating recess of the shaft cover 51 may face the flexible display screen 30. In other words, a side of the shaft cover 51 facing the flexible display screen 30 may be provided with the accommodating recess. For example, a material of the shaft cover 51 may be a metal material, for example, but not limited to, a stainless steel or a titanic alloy.

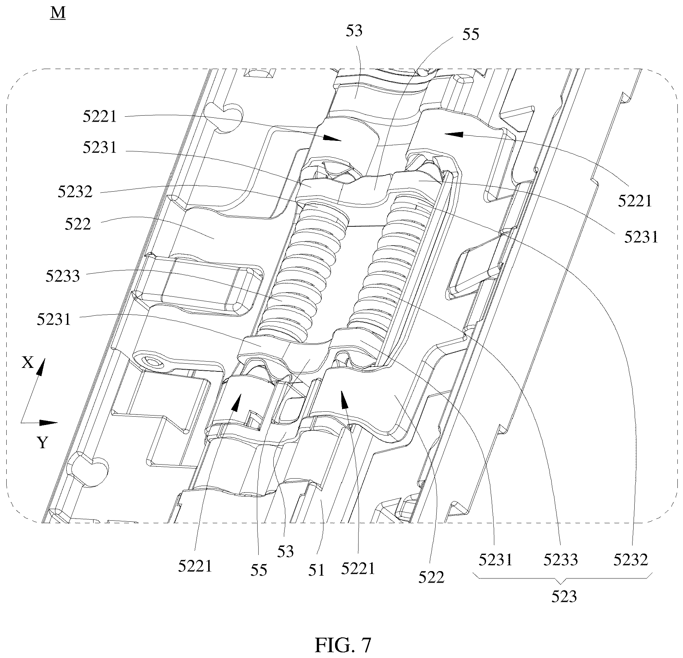

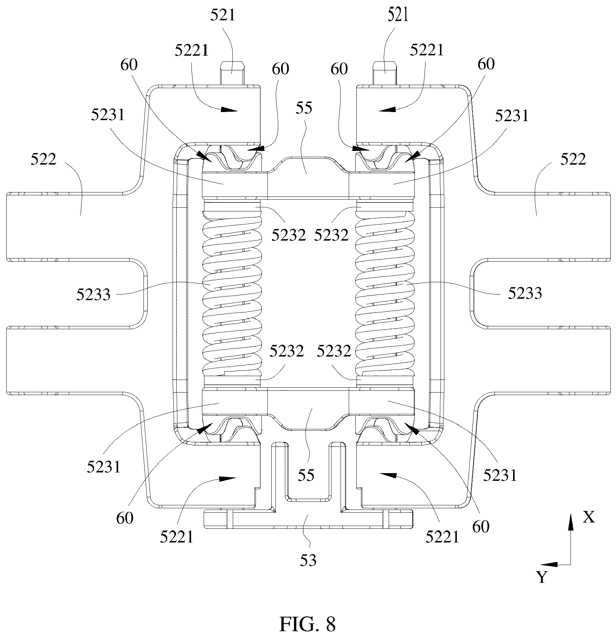

FIG. 7 is an enlarged diagram of a part M in FIG. 5. FIG. 8 shows a partial structure of the hinge apparatus 50. As shown in FIG. 7 and FIG. 8, the hinge apparatus 50 further includes swing arm assemblies 52. The swing arm assembly 52 is disposed on the shaft cover 51. The swing arm assembly 52 may be detachably connected to the frame 40. The swing arm assembly 52 includes a transmission shaft 521. The transmission shaft 521 is rotatably connected to the shaft cover 51. When the transmission shaft 521 is subjected to a torque action, the transmission shaft 521 may rotate relative to the shaft cover 51.

In some implementations, the hinge apparatus 50 further includes a shaft base 53. The shaft base 53 may be configured to provide a mounting base for other components. The shaft base 53 may be detachably connected to the shaft cover 51, for example, but not limited to, connected to the shaft cover 51 by using a screw. The shaft base 53 may be disposed in the accommodating recess of the shaft cover 51. The transmission shaft 521 of the swing arm assembly 52 is rotatably connected to the shaft base 53. The transmission shaft 521 may rotate relative to the shaft base 53. For example, the shaft base 53 has a shaft hole, and an end of the transmission shaft 521 is inserted into the shaft hole of the shaft base 53.

The swing arm assembly 52 further includes a swing arm 522. The swing arm 522 is connected to the transmission shaft 521. The swing arm 522 may be detachably connected to the frame 40. When force is applied to the frame 40 to unfold or fold the frame 40, the frame 40 and the swing arm 522 may swing synchronously. When the swing arm 522 performs a swinging motion relative to the shaft cover 51, the swing arm 522 may drive the transmission shaft 521 to rotate relative to the shaft cover 51.

In some possible implementations, the swing arm 522 may include a fitting hole. The fitting hole may be a non-circular hole. The transmission shaft 521 passes through the fitting hole of the swing arm 522. A shape of a shaft segment on the transmission shaft 521 that matches the fitting hole may match a shape of the fitting hole. The swing arm 522 cannot rotate relative to the transmission shaft 521, so that when swinging, the swing arm 522 can synchronously drive the transmission shaft 521 to rotate. For example, a cross section of the fitting hole of the swing arm 522 may include an arc segment and a straight line segment. For example, there is one arc segment and one straight line segment. The straight line segment is connected to two end points of the arc segment. Alternatively, there are two arc segments and two straight line segments. The arc segments and the straight line segments are alternately provided. One straight line segment is connected to two end points of the two arc segments.

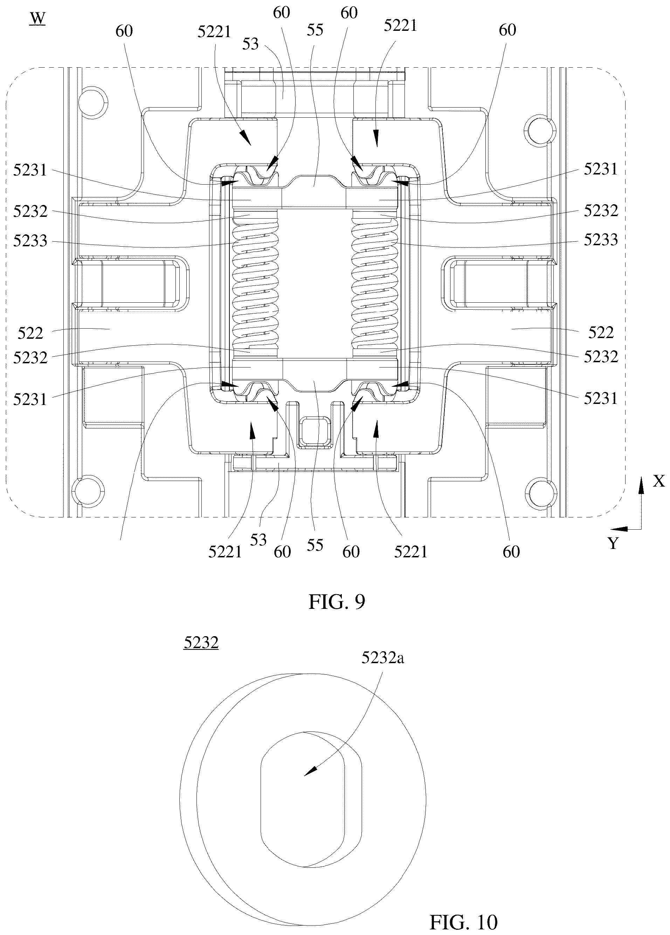

FIG. 9 is an enlarged diagram of a part W in FIG. 6. As shown in FIG. 7 to FIG. 9, the swing arm 522 includes a pushing member 5221. The swing arm assembly 52 further includes a damping component 523. The damping component 523 includes a guide slidable member 5231, a friction damping member 5232, and a first elastic member 5233. When the swing arm 522 swings, the pushing member 5221 of the swing arm 522 may push or release the guide slidable member 5231. The guide slidable member 5231 is slidable relative to the shaft cover 51. The pushing member 5221 abuts against the guide slidable member 5231, so that the pushing member 5221 can apply force to the guide slidable member 5231 to drive the guide slidable member 5231 to slide.

In some possible implementations, the swing arm 522 includes an accommodating part. The pushing member 5221 is disposed facing the accommodating part. At least part of the damping component 523 may be disposed in the accommodating part of the swing arm 522.

Both the guide slidable member 5231 and the friction damping member 5232 are slideably connected to the transmission shaft 521 in an axial direction X of the transmission shaft 521. The friction damping member 5232 is in contact with the guide slidable member 5231. The first elastic member 5233 is disposed, in the axial direction X of the transmission shaft 521, on a side of the friction damping member 5232 facing away from the guide slidable member 5231. The first elastic member 5233 is configured to apply force that is directed toward the guide slidable member 5231 to the friction damping member 5232, so that the friction damping member 5232 and the guide slidable member 5231 remain in good contact. For example, the guide slidable member 5231 and the friction damping member 5232 may be disposed between the first elastic member 5233 and the pushing member 5221. The friction damping member 5232 may be disposed between the guide slidable member 5231 and the first elastic member 5233. For example, the shaft cover 51 may be a strip-shaped structure, and the axial direction X of the transmission shaft 521 is the same as a length direction of the shaft cover 51.

The guide slidable member 5231 is rotatably connected to the transmission shaft 521. The guide slidable member 5231 may rotate relative to the transmission shaft 521, so that when the swing arm 522 drives the transmission shaft 521 to synchronously rotate, the guide slidable member 5231 does not rotate with the transmission shaft 521.

The friction damping member 5232 is non-rotatably connected to the transmission shaft 521. In other words, when the friction damping member 5232 is subjected to a torque action, the friction damping member 5232 cannot rotate relative to the transmission shaft 521. Therefore, when the swing arm 522 drives the transmission shaft 521 to synchronously rotate, the transmission shaft 521 can drive the friction damping member 5232 to synchronously rotate.

In the electronic device 10 of this application, when the swing arm 522 swings, the swing arm 522, the transmission shaft 521, and the friction damping member 5232 synchronously rotate relative to the shaft cover 51, and the pushing member 5221 pushes or releases the guide slidable member 5231. The guide slidable member 5231 and the friction damping member 5232 synchronously slide in the axial direction X of the transmission shaft 521, and the friction damping member 5232 rotates relative to the guide slidable member 5231.

When the pushing member 5221 pushes the guide slidable member 5231 to slide in the axial direction X of the transmission shaft 521, the guide slidable member 5231 and the friction damping member 5232 may move away from the pushing member 5221, and the first elastic member 5233 is deformed to accumulate elastic potential energy. For example, the first elastic member 5233 is compressed and deformed to accumulate elastic potential energy. When the pushing member 5221 releases the guide slidable member 5231 to slide in the axial direction X of the transmission shaft 521, the first elastic member 5233 releases elastic potential energy, to provide driving force for the guide slidable member 5231 and the friction damping member 5232, so that the guide slidable member 5231 and the friction damping member 5232 move close to the pushing member 5221. Under an action of the first elastic member 5233, the friction damping member 5232 and the guide slidable member 5231 can remain in contact.

In a process in which the pushing member 5221 of the swing arm 522 pushes or releases the guide slidable member 5231, the pushing member 5221 of the swing arm 522 also rotates relative to the guide slidable member 5231, so that friction force exists between the pushing member 5221 and the guide slidable member 5231, and damping force can be generated between the pushing member 5221 and the guide slidable member 5231. In addition, because the swing arm 522, the transmission shaft 521, and the friction damping member 5232 may synchronously rotate, and the guide slidable member 5231 may only slide in the axial direction X of the transmission shaft 521 under an action of the pushing member 5221 or the first elastic member 5233, when the friction damping member 5232 slides in the axial direction X of the transmission shaft 521, the friction damping member 5232 also rotates relative to the guide slidable member 5231, so that friction force exists between the friction damping member 5232 and the guide slidable member 5231, and damping force can be generated between the friction damping member 5232 and the guide slidable member 5231.

In the electronic device 10 of this embodiment of this application, the swing arm 522, the transmission shaft 521, and the friction damping member 5232 may be linked, so that the swing arm 522, the transmission shaft 521, and the friction damping member 5232 can synchronously rotate relative to the shaft cover 51. The guide slidable member 5231 may slide along the transmission shaft 521, but cannot rotate relative to the transmission shaft 521. Therefore, when a torque is applied to the frame 40 connected to the swing arm 522, corresponding damping force may be generated between the pushing member 5221 of the swing arm 522 and the guide slidable member 5231 and between the friction damping member 5232 and the guide slidable member 5231 due to relative rotation, so that the hinge apparatus 50 can generate large damping force, to provide sufficiently large damping force to the frame 40, so that unfolding or folding of the frame 40 can be kept smooth and a rotation speed is uniform. This can maintain a good damping feel for the frame 40, to help improve satisfaction of use experience of the electronic device 10. Alternatively, when it is ensured that a magnitude of damping force provided by the hinge apparatus 50 to the frame 40 remains unchanged, sizes of the pushing member 5221 and the guide slidable member 5231 may be reduced. This facilitates a miniaturization design of the hinge apparatus 50.

In addition, after the sizes of the pushing member 5221 and the guide slidable member 5231 are reduced, if elastic force of the first elastic member 5233 is increased, the friction force between the pushing member 5221 and the guide slidable member 5231 may be increased to ensure that the magnitude of the damping force provided by the hinge apparatus 50 to the frame 40 remains unchanged. However, a manner of increasing the elastic force of the first elastic member 5233 may worsen a degree of mutual wear between the pushing member 5221 and the guide slidable member 5231. In this application, because the damping force may be generated between the pushing member 5221 and the guide slidable member 5231 and between the friction damping member 5232 and the guide slidable member 5231, there is no need to increase the elastic force of the first elastic member 5233 to ensure that the magnitude of the damping force provided by the hinge apparatus 50 to the frame 40 remains unchanged, thereby helping avoid the foregoing problem.

In some possible implementations, refer to FIG. 9. Friction damping members 5232, guide slidable members 5231, and pushing members 5221 are respectively disposed on two opposite sides of the first elastic member 5233 in the axial direction X of the transmission shaft 521. When the swing arm 522 swings, the pushing members 5221 on the two opposite sides of the first elastic member 5233 may synchronously rotate relative to the shaft cover 51, so that the pushing members 5221 on the two opposite sides of the first elastic member 5233 can synchronously push or release corresponding guide slidable members 5231. The friction damping members 5232 on the two opposite sides of the first elastic member 5233 may rotate relative to the guide slidable members 5231. Friction force may be generated between the friction damping members 5232 and the guide slidable members 5231 on the both two opposite sides of the first elastic member 5233 may both generate friction force, helping further increase damping force when the swing arm 522 swings, to increase damping force of the frame 40. Alternatively, when it is ensured that damping force of the frame 40 remains unchanged, sizes of the pushing member 5221 and the guide slidable member 5231 may be further reduced. This facilitates a miniaturization design of the hinge apparatus 50.

For example, in the swing arm assembly 52, the swing arm 522 may include two pushing members 5221. An accommodating part is formed between the two pushing members 5221 in the axial direction X of the transmission shaft 521. The first elastic member 5233 is disposed between the two pushing members 5221. The guide slidable member 5231, the friction damping member 5232, and the first elastic member 5233 may be disposed between the two pushing members 5221 in the axial direction X of the transmission shaft 521.

The guide slidable member 5231 and the friction damping member 5232 are both sleeved on the transmission shaft 521, so that the guide slidable member 5231 and the friction damping member 5232 are slideably connected to the transmission shaft 521. The transmission shaft 521 passes through the guide slidable member 5231 and the friction damping member 5232, so that the guide slidable member 5231 and the friction damping member 5232 are unlikely to fall off from the transmission shaft 521.

In some examples, the guide slidable member 5231 may include an avoidance circular hole. The transmission shaft 521 passes through the avoidance circular hole. An outer peripheral surface of the transmission shaft 521 may include an arc surface and a flat surface, so that a cross section of the transmission shaft 521 includes an arc segment and a straight line segment. The arc surface on the transmission shaft 521 matches a shape of the avoidance circular hole. The guide slidable member 5231 is sleeved on the transmission shaft 521, and the arc surface of the transmission shaft 521 provides support for the guide slidable member 5231. There may be a gap between the flat surface on the transmission shaft 521 and an inner wall of the avoidance circular hole. The guide slidable member 5231 may rotate relative to the transmission shaft 521, so that when the transmission shaft 521 rotates, the transmission shaft 521 may not drive the guide slidable member 5231 to rotate.

In some examples, FIG. 10 schematically shows a structure of the friction damping member 5232. Refer to FIG. 9 and FIG. 10. The friction damping member 5232 may include a limiting hole 5232a. The limiting hole 5232a may be a non-circular hole. The transmission shaft 521 passes through the limiting hole 5232a of the friction damping member 5232. A cross-section shape of the transmission shaft 521 matches a cross-sectional shape of the limiting hole 5232a, so that a shape of a shaft segment that is on the transmission shaft 521 and that matches the limiting hole 5232a can match a shape of the limiting hole 5232a, and therefore, the friction damping member 5232 cannot rotate relative to the transmission shaft 521, so that when rotating, the transmission shaft 521 can synchronously drive the friction damping member 5232 to rotate. For example, a cross section of the limiting hole 5232a of the friction damping member 5232 may include an arc segment and a straight line segment. For example, there is one arc segment and one straight line segment. The straight line segment is connected to two end points of the arc segment. For example, the limiting hole 5232a of the friction damping member 5232 is a strip-shaped limiting hole. A cross section of the limiting hole 5232a of the friction damping member 5232 may include two arc segments and two straight line segments. The arc segments and the straight line segments are alternately provided. One straight line segment is connected to two end points of the two arc segments. The cross-section shape of the transmission shaft 521 matches a cross-sectional shape of the strip-shaped limiting hole.

Both a surface of the friction damping member 5232 and a surface of the guide slidable member 5231 that are in contact with each other may be flat surfaces. In other words, a surface that is on the friction damping member 5232 and that is configured to contact the guide slidable member 5231 is a flat surface, and a surface that is on the guide slidable member 5231 and that is configured to contact the friction damping member 5232 is also a flat surface. Therefore, when the friction damping member 5232 rotates relative to the guide slidable member 5231, the friction damping member 5232 does not slide in the axial direction X of the transmission shaft 521 under limiting constraint of the guide slidable member 5231. This helps ensure stable rotation of the friction damping member 5232. For example, the friction damping member 5232 may include a friction plate. The friction plate is easy to be processed and manufactured and occupies little space. For example, the friction plate may be processed and manufactured by stamping, laser cutting, linear cutting, or die casting. A material of the friction plate may include, but is not limited to, a stainless steel, an amorphological alloy, a silicon steel, a tungsten steel, or a spring steel, so that the friction plate can have good wear resistance.

Refer to FIG. 9. The pushing member 5221 may be a pushing cam. The guide slidable member 5231 may be a guide cam. The pushing member 5221 is disposed, in the axial direction X of the transmission shaft 521, facing the guide slidable member 5231. The pushing member 5221 and the guide slidable member 5231 are engaged with each other. The pushing member 5221 and the guide slidable member 5231 are each provided with engaging slots and engaging protrusions 60. The engaging protrusions 60 of one member are inserted into the engaging slots of the other member, so that the pushing member 5221 is engaged with the guide slidable member 5231. In the axial direction X of the transmission shaft 521, one end of the pushing member 5221 close to the guide slidable member 5231 may be provided with the engaging slots and the engaging protrusions 60, and one end of the guide slidable member 5231 facing away from the first elastic member 5233 may be provided with the engaging slots and the engaging protrusions 60.

When the pushing member 5221 and the transmission shaft 521 synchronously rotate, the pushing member 5221 rotates relative to the guide slidable member 5231, so that when the engaging protrusion 60 of the pushing member 5221 is withdrawn from the engaging slot of the guide slidable member 5231, the guide slidable member 5231 may be pushed to slide in the axial direction X of the transmission shaft 521, so that the guide slidable member 5231 drives the first elastic member 5233 to deform to accumulate elastic potential energy. When the engaging protrusion 60 of the pushing member 5221 is inserted into a next engaging slot of the guide slidable member 5231, the first elastic member 5233 releases the elastic potential energy, and the guide slidable member 5231 may be pushed to move in the axial direction X of the transmission shaft 521, so that the guide slidable member 5231 and the pushing member 5221 are engaged again. The hinge apparatus 50 generates damping force to a swing process of the swing arm 522 by using the pushing member 5221, the guide slidable member 5231, and the first elastic member 5233, so that the swing arm 522 and the transmission shaft 521 can hover at a predetermined position. This helps ensure stable rotation of the swing arm 522 and the transmission shaft 521.

In some examples, the first elastic member 5233 is looped around the transmission shaft 521. The first elastic member 5233 may be a coil spring.

The swing arm assemblies 52 are disposed on two opposite sides of the shaft cover 51. For example, the swing arm assemblies 52 and the frames 40 are respectively disposed on two sides of the shaft cover 51 in the width direction Y of the shaft cover 51. The frames 40 are connected to corresponding swing arm assemblies 52. The hinge apparatus 50 further includes second connection members 55. Guide slidable members 5231 located on a same side of the first elastic member 5233 are connected by using the second connection member 55 in the axial direction X of the transmission shaft 521. The second connection member 55 constrains the guide slidable member 5231, so that when the pushing member 5221 and the transmission shaft 521 synchronously rotate, the pushing member 5221 rotates relative to the guide slidable member 5231, but the guide slidable member 5231 does not rotate with the transmission shaft

521. A structure formed by the guide slidable member 5231 and the second connection members 55 may enable the swing arms 522 at the two sides of the shaft cover 51 to synchronously swing. In other words, only when the swing arms 522 at the two sides of the shaft cover 51 are forced to swing at the same time, the guide slidable member 5231 may be pushed or released by the pushing member 5221, and the guide slidable member 5231 and the second connection member 55 synchronously move in the axial direction X of the transmission shaft 521.

For example, at least two groups of swing arm assemblies 52 may be disposed on the shaft cover 51 in the axial direction X of the transmission shaft 521. Each group of swing arm assemblies 52 may include two swing arm assemblies 52 that are symmetrically disposed. For example, one swing arm assembly 52 may include one transmission shaft 521, one swing arm 522, two guide slidable members 5231, and one first elastic member 5233.

For example, the guide slidable member 5231 and the second connection member 55 may be an integrally formed structure. This helps improve connection strength between the guide slidable member 5231 and the second connection member 55.

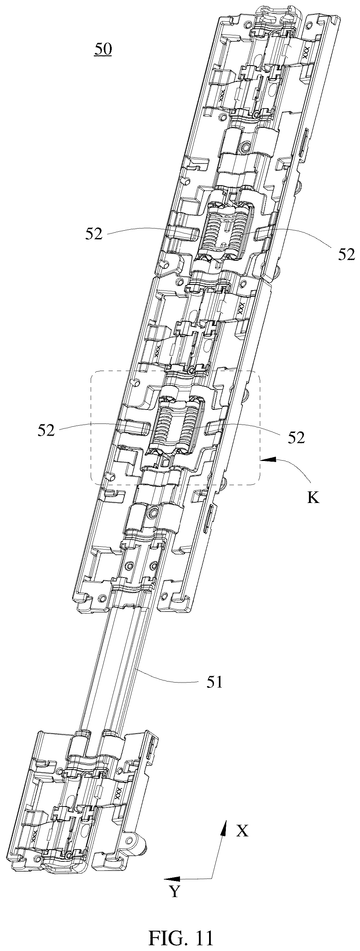

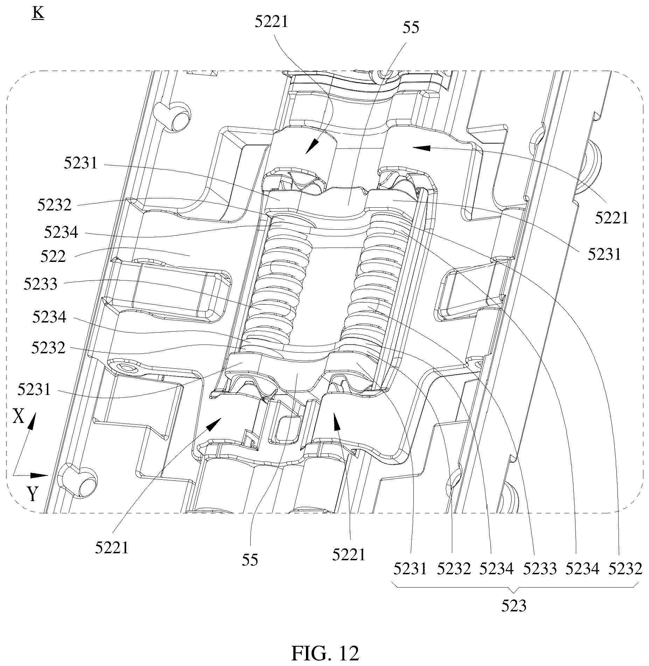

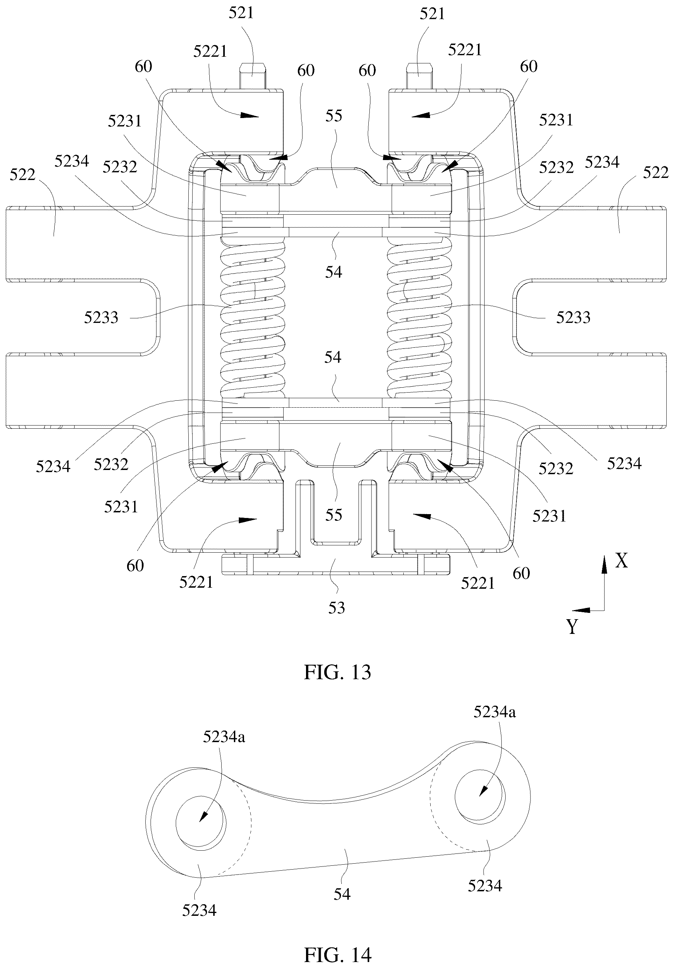

FIG. 11 schematically shows a partial structure of the hinge apparatus 50. FIG. 12 is an enlarged schematic diagram of a part K in FIG. 11. FIG. 13 schematically shows a partial structure of the hinge apparatus 50. As shown in FIG. 11, FIG. 12, and FIG. 13, the damping component 523 may further include a limiting stop member 5234. The limiting stop member 5234 is slidable relative to the shaft cover 51. The limiting stop member 5234 is slideably connected to the transmission shaft 521 in the axial direction X of the transmission shaft 521. The limiting stop member 5234 is disposed between the guide slidable member 5231 and the first elastic member 5233. The first elastic member 5233 may be configured to apply force that is directed toward the guide slidable member 5231 to the limiting stop member 5234, so that the limiting stop member 5234 and the friction damping member 5232 remain in good contact. When the pushing member 5221 releases the guide slidable member 5231, the first elastic member 5233 may push the limiting stop member 5234, the friction damping member 5232, and the guide slidable member 5231 to slide along the transmission shaft 521. The friction damping member 5232 is disposed on a side of the limiting stop member 5234 facing the guide slidable member 5231. The friction damping member 5232 is in contact with the limiting stop member 5234. When the swing arm 522 rotates, the guide slidable member 5231, the friction damping member 5232, and the limiting stop member 5234 synchronously slide along the transmission shaft 521, and the friction damping member 5232 rotates relative to the guide slidable member 5231 and the limiting stop member 5234.

The limiting stop member 5234 is rotatably connected to the transmission shaft 521. The limiting stop member 5234 may rotate relative to the transmission shaft 521, so that when the swing arm 522 drives the transmission shaft 521 to synchronously rotate, the limiting stop member 5234 may not rotate with the transmission shaft 521.

Because the swing arm 522, the transmission shaft 521, and the friction damping member 5232 may synchronously rotate, and the guide slidable member 5231 and the limiting stop member 5234 may only slide in the axial direction X of the transmission shaft 521 under an action of the pushing member 5221 or the first elastic member 5233, when the friction damping member 5232 slides in the axial direction X of the transmission shaft 521, the friction damping member 5232 also rotates relative to the limiting stop member 5234, so that friction force exists between the friction damping member 5232 and the limiting stop member 5234, in other words, damping force may also be generated between the friction damping member 5232 and the limiting stop member 5234, to further increase damping force of the swing arm 522. Alternatively, when it is ensured that a magnitude of damping force provided by the hinge apparatus 50 to the frame 40 remains unchanged, sizes of the pushing member 5221 and the guide slidable member 5231 may be reduced. This facilitates a miniaturization design of the hinge apparatus 50.

The limiting stop member 5234 is sleeved on the transmission shaft 521, so that the limiting stop member 5234 is slideably connected to the transmission shaft 521. The transmission shaft 521 passes through the limiting stop member 5234, so that the limiting stop member 5234 is unlikely to fall off from the transmission shaft 521.

In some examples, FIG. 14 schematically shows a structure of limiting stop members 5234 and a first connection member 54. Refer to FIG. 13 and FIG. 14. The limiting stop member 5234 may include a circular hole 5234a. The transmission shaft 521 passes through the circular hole 5234a. An outer peripheral surface of the transmission shaft 521 may include an arc surface and a flat surface, so that a cross section of the transmission shaft 521 includes an arc segment and a straight line segment. The arc surface on the transmission shaft 521 matches a shape of the circular hole 5234a. The limiting stop member 5234 is sleeved on the transmission shaft 521, and the arc surface of the transmission shaft 521 provides support for the limiting stop member 5234. There may be a gap between the flat surface on the transmission shaft 521 and an inner wall of the avoidance circular hole. The limiting stop member 5234 may rotate relative to the transmission shaft 521, so that when the transmission shaft 521 rotates, the transmission shaft 521 may not drive the limiting stop member 5234 to rotate.

Both a surface of the friction damping member 5232 and a surface of the limiting stop member 5234 that are in contact with each other may be flat surfaces. In other words, a surface that is on the friction damping member 5232 and that is configured to contact with the limiting stop member 5234 is a flat surface, and a surface that is on the limiting stop member 5234 and that is configured to contact with the friction damping member 5232 is also a flat surface. Therefore, when the friction damping member 5232 rotates relative to the limiting stop member 5234, the friction damping member 5232 does not slip in the axial direction X of the transmission shaft 521 under limiting constraint of the limiting stop member 5234. This helps ensure stable rotation of the friction damping member 5232. For example, the limiting stop member 5234 may include a limiting stop plate. The limiting stop plate is easy to be processed and manufactured and occupies little space. For example, the limiting stop plate may be processed and manufactured by stamping, laser cutting, linear cutting, or die casting. A material of the limiting stop plate may include, but is not limited to, a stainless steel, an amorphological alloy, a silicon steel, a tungsten steel, or a spring steel, so that the limiting stop plate can have good wear resistance.

The friction damping member 5232 and the limiting stop member 5234 are disposed on at least one side of the first elastic member 5233 in the axial direction X of the transmission shaft 521. In other words, both the friction damping member 5232 and the limiting stop member 5234 are disposed on one side of the first elastic member 5233. Alternatively, the friction damping members 5232 and the limiting stop members 5234 are disposed on both two opposite sides of the first elastic member 5233.

In some examples, refer to FIG. 13. The friction damping members 5232 and the limiting stop members 5234 are disposed on both two opposite sides of the first elastic member 5233 in the axial direction X of the transmission shaft 521, and there is one friction damping member 5232 and one limiting stop member 5234 on each side. Two ends of the first elastic member 5233 respectively abut against corresponding limiting stop members 5234. When two pushing members 5221 on two sides of the first elastic member 5233 rotate, the guide slidable members 5231, the friction damping members 5232, and the limiting stop members 5234 on the two sides of the first elastic members 5233 synchronously slide, to compress or release the first elastic members 5233.

In some examples, at least two friction damping members 5232 are disposed on at least one side of the first elastic member 5233 in the axial direction X of the transmission shaft 521. For example, at least two friction damping members 5232 are disposed on one side of the first elastic member 5233, and one friction damping member 5232 is disposed on the other side. Alternatively, at least two friction damping members 5232 are disposed on each of two opposite sides of the first elastic member 5233. The friction damping members 5232 and the limiting stop members 5234 located on a same side of the first elastic member 5233 are alternately disposed. A magnitude of damping force generated by the swing arm 522 may be controlled by adjusting quantities of the friction damping members 5232 and the limiting stop members 5234. In this application, the quantity of the friction damping members 5232 or the limiting stop members 5234 disposed on two sides of the first elastic member 5233 is not specifically limited.

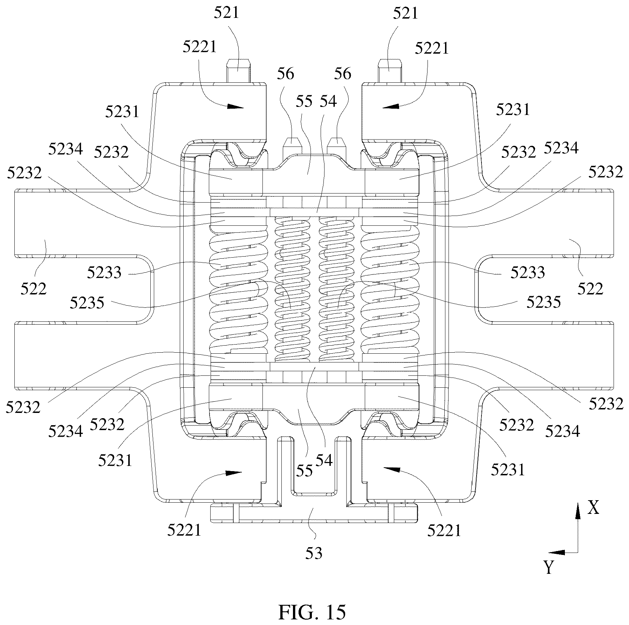

For example, FIG. 15 schematically shows a partial structure of the hinge apparatus 50. Refer to FIG. 15. Two friction damping members 5232 and one limiting stop member 5234 are disposed on each of two opposite sides of the first elastic member 5233. One friction damping member 5232 is disposed between the limiting stop member 5234 and the guide slidable member 5231, and the other friction damping member 5232 is disposed between the limiting stop member 5234 and the first elastic member 5233. When the friction damping member 5232 between the limiting stop member 5234 and the guide slidable member 5231 rotates, friction force is respectively generated between the limiting stop member 5234 and the friction damping member 5232 and between the guide slidable member 5231 and the friction damping member 5232. When the friction damping member 5232 between the limiting stop member 5234 and the first elastic member 5233 rotates, friction force is generated between the limiting stop member 5234 and the friction damping member 5232.

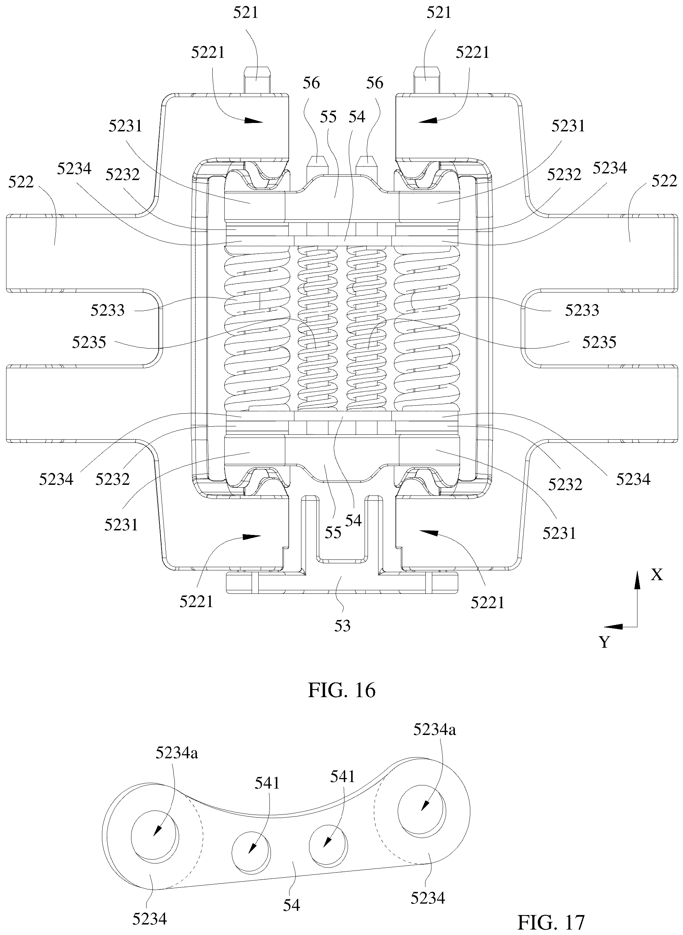

Refer to FIG. 11. The swing arm assemblies 52 are disposed on two opposite sides of the shaft cover 51. For example, the swing arm assemblies 52 and the frames 40 are respectively disposed on two sides of the shaft cover 51 in the width direction Y of the shaft cover 51. The frames 40 are connected to corresponding swing arm assemblies 52. FIG. 16 schematically shows a partial structure of the hinge apparatus 50. As shown in FIG. 16, the hinge apparatus 50 further includes first connection members 54. The limiting stop members 5234 located on the same side of the first elastic member 5233 are connected by using the first connection member 54 in the axial direction X of the transmission shaft 521. The first connection member 54 restricts the limiting stop member 5234, so that when the pushing member 5221, the transmission shaft 521, and the friction damping member 5232 synchronously rotate, the friction damping member 5232 rotates relative to the limiting stop member 5234, but the limiting stop member 5234 does not rotate with the transmission shaft 521, and the limiting stop member 5234 and the first connection member 54 move only along the transmission shaft 521.

For example, the limiting stop member 5234 and the first connection member 54 may be an integrally formed structure. This helps improve connection strength between the limiting stop member 5234 and the first connection member 54.

The damping component 523 further includes a second elastic member 5235. The first connection member 54 is disposed, in the axial direction X of the transmission shaft 521, on a side of the second elastic member 5235 facing the guide slidable member 5231. The second elastic member 5235 may abut against the first connection member 54. The first elastic member 5233 and the second elastic member 5235 are configured to apply force that is directed toward the guide slidable member 5231 to the limiting stop member 5234. When the pushing member 5221 pushes the guide slidable member 5231, the friction damping member 5232, and the limiting stop member 5234 to slide along the transmission shaft 521, the limiting stop member 5234 may compress the first elastic member 5233 and the second elastic member 5235. When the pushing member 5221 releases the guide slidable member 5231, the first elastic member 5233 and the second elastic member 5235 may push the limiting stop member 5234, the friction damping member 5232, and the guide slidable member 5231 to slide along the transmission shaft 521.

The second elastic member 5235 may help further increase friction force between the friction damping member 5232 and the limiting stop member 5234, so that larger damping force is generated between the friction damping member 5232 and the limiting stop member 5234. The second elastic member 5235 may also help further increase friction force between the friction damping member 5232 and the guide slidable member 5231, so that larger damping force is generated between the friction damping member 5232 and the guide slidable member 5231.

The damping component 523 further includes a guide shaft 56. An axis of the guide shaft 56 may be parallel to an axis of the transmission shaft 521. The guide shaft 56 is connected to the guide slidable member 5231. The second elastic member 5235 is looped around the guide shaft 56. The guide shaft 56 may provide a guide function for the second elastic member 5235, and may effectively prevent the second elastic member 5235 from falling off between two first connection members 54.

For example, the first connection member 54 may be sleeved on the guide shaft 56. FIG. 17 schematically shows a structure of limiting stop members 5234 and the first connection member 54. Refer to FIG. 17. The first connection member 54 may be provided with shaft holes 541. The guide shaft 56 passes through the shaft hole 541.

For example, a quantity of second elastic members 5235 may be at least two. For example, the quantity of the second elastic members 5235 may be two. A quantity of guide shafts 56 is equal to the quantity of the second elastic members 5235.

For example, the second elastic member 5235 may be a coil spring.

Friction damping members 5232, limiting stop members 5234, guide slidable members 5231, and pushing members 5221 are respectively disposed on two opposite sides of the first elastic member 5233 in the axial direction X of the transmission shaft 521. The hinge apparatus 50 further includes the second connection members 55. Guide slidable members 5231 located on a same side of the first elastic member 5233 are connected by using the second connection member 55 in the axial direction X of the transmission shaft 521. In the axial direction X of the transmission shaft 521, the second connection member 55 located on one side of the second elastic member 5235 is connected to the guide shaft 56, and the second connection member 55 located on the other side of the second elastic member 5235 is slidably connected to the guide shaft 56. When the guide slidable member 5231 and the second connection member 55 located on one side of the second elastic member 5235 slide along the transmission shaft 521, the second connection member 55 may drive the guide shaft 56 to move in the axial direction X of the transmission shaft 521, and the guide shaft 56 slides relative to the second connection member 55 on the other side of the second elastic member 5235. For example, the second connection member 55 located on the other side of the second elastic member 5235 is provided with a through hole. The guide shaft 56 passes through the through hole. One end of the guide shaft 56 may be threaded out of the through hole.

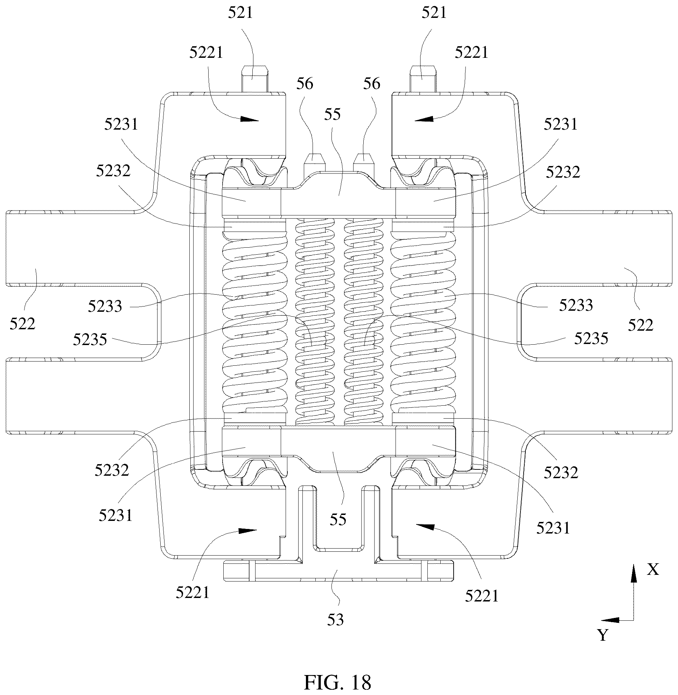

In some possible implementations, FIG. 18 schematically shows a partial structure of the hinge apparatus 50. Refer to FIG. 18. The guide slidable members 5231 located on the same side of the first elastic member 5233 are connected by using the second connection member 55 in the axial direction X of the transmission shaft 521. The damping component 523 further includes the second elastic member 5235. The second connection member 55 is disposed, in the axial direction X of the transmission shaft 521, on a side of the second elastic member 5235 facing the guide slidable member 5231. The second elastic member 5235 abuts against the second connection member 55. The first elastic member 5233 and the second elastic member 5235 are configured to apply force that is directed toward the pushing member 5221 to the guide slidable member 5231.

In some examples, one friction damping member 5232 may be disposed on each of two opposite sides of the first elastic member 5233. Two guide slidable members 5231 located on a same side of the first elastic member 5233 are respectively connected to the second connection members 55. The second elastic member 5235 is disposed between two second connection members 55. The guide shaft 56 is connected to one second connection member 55, and is slidably connected to the other second connection member 55.

In the descriptions of embodiments of this application, it should be noted that, unless otherwise explicitly specified and defined, the terms "mount", "communicate", and "connect" should be understood in a broadest sense, for example, may be a fixed connection, an indirect connection by using an intermediate medium, or communication inside two elements or an interactive relationship between two elements. A person of ordinary skill in the art may understand specific meanings of the foregoing terms in embodiments of this application based on a specific situation.

In embodiments of this application, it does not indicate or imply that an apparatus or an element needs to have a particular orientation or needs to be constructed and operated in a particular orientation, and therefore should not be construed as a limitation on embodiments of this application. In the descriptions of embodiments of this application, unless otherwise specifically limited, "a plurality of" means two or more.

In the specification, claims, and accompanying drawings of embodiments of this application, the terms "first", "second", "third", "fourth", and so on (if existent) are intended to distinguish between similar objects but do not necessarily indicate a specific order or sequence. It should be understood that data used in such a way is interchangeable in a proper circumstance, so that embodiments of this application described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

The term "a plurality of" in this specification means two or more than two. The term "and/or" used herein describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In a formula, the character "/" indicates a "division" relationship between the associated objects.

It may be understood that, various reference numerals in embodiments of this application are merely for differentiation for ease of description, and are not intended to limit the scope of embodiments of this application.

It may be understood that in embodiments of this application, sequence numbers of the foregoing processes do not mean execution sequences. The execution sequences of the processes should be determined according to functions and internal logic of the processes, and should not be construed as any limitation on the implementation processes of embodiments of this application.

## Claims

1. A hinge apparatus, comprising:
a shaft cover; and
a swing arm assembly, comprising a transmission shaft, a swing arm, and a damping component, wherein the transmission shaft is rotatably connected to the shaft cover, and the swing arm is connected to the transmission shaft; the swing arm comprises a pushing member, and the damping component comprises a guide slidable member, a friction damping member, and a first elastic member; and the pushing member abuts against the guide slidable member, both the guide slidable member and the friction damping member are slideably connected to the transmission shaft in an axial direction of the transmission shaft, the friction damping member is in contact with the guide slidable member, the first elastic member is disposed on a side of the friction damping member facing away from the guide slidable member, and the first elastic member is configured to apply force that is directed toward the guide slidable member to the friction damping member; and
when the swing arm rotates, the swing arm, the transmission shaft, and the friction damping member synchronously rotate relative to the shaft cover, and the pushing member pushes or releases the guide slidable member, so that the guide slidable member and the friction damping member synchronously slide in the axial direction of the transmission shaft, and the friction damping member rotates relative to the guide slidable member.

2. The hinge apparatus according to claim 1, wherein friction damping members, guide slidable members, and pushing members are respectively disposed on two opposite sides of the first elastic member in the axial direction of the transmission shaft.

3. The hinge apparatus according to claim 1 or 2, wherein the damping component further comprises a limiting stop member, wherein the limiting stop member is slideably connected to the transmission shaft in the axial direction of the transmission shaft, the limiting stop member is disposed between the guide slidable member and the first elastic member, the friction damping member is disposed on a side of the limiting stop member facing the guide slidable member, the friction damping member is in contact with the limiting stop member, and when the swing arm rotates, the guide slidable member, the friction damping member, and the limiting stop member synchronously slide along the transmission shaft, and the friction damping member rotates relative to the guide slidable member and the limiting stop member.

4. The hinge apparatus according to claim 3, wherein the friction damping member and the limiting stop member are disposed on at least one side of the first elastic member in the axial direction of the transmission shaft.

5. The hinge apparatus according to claim 4, wherein at least two friction damping members are disposed on the at least one side of the first elastic member in the axial direction of the transmission shaft, and the friction damping members and limiting stop members located on a same side of the first elastic member are alternately disposed.

6. The hinge apparatus according to any one of claims 3 to 5, wherein swing arm assemblies are respectively disposed on two opposite sides of the shaft cover, and the hinge apparatus further comprises a first connection member, and the limiting stop members located on the same side of the first elastic member are connected by using the first connection member in the axial direction of the transmission shaft.

7. The hinge apparatus according to claim 6, wherein the damping component further comprises a second elastic member, the first connection member is disposed, in the axial direction of the transmission shaft, on a side of the second elastic member facing the guide slidable member, and the first elastic member and the second elastic member are configured to apply force that is directed toward the guide slidable member to the limiting stop member.

8. The hinge apparatus according to claim 7, wherein the damping component further comprises a guide shaft, wherein the guide shaft is connected to the guide slidable member, and the second elastic member is looped around the guide shaft.

9. The hinge apparatus according to claim 8, wherein friction damping members, limiting stop members, guide slidable members, and pushing members are respectively disposed on two opposite sides of the first elastic member in the axial direction of the transmission shaft, and the hinge apparatus further comprises a second connection member, guide slidable members located on the same side of the first elastic member are connected by using the second connection member in the axial direction of the transmission shaft, the second connection member located on one side of the second elastic member is connected to the guide shaft, and the second connection member located on the other side of the second elastic member is slideably connected to the guide shaft.

10. The hinge apparatus according to any one of claims 3 to 9, wherein a surface of the friction damping member that is in contact with the limiting stop member is a flat surface.

11. The hinge apparatus according to any one of claims 3 to 10, wherein the friction damping member comprises a friction plate, and the limiting stop member comprises a limiting stop plate.

12. The hinge apparatus according to any one of claims 1 to 11, wherein the guide slidable member and the friction damping member are both sleeved on the transmission shaft.

13. The hinge apparatus according to claim 12, wherein the guide slidable member comprises an avoidance circular hole, the friction damping member comprises a strip-shaped limiting hole, the transmission shaft passes through the avoidance circular hole and the strip-shaped limiting hole, and a cross-section shape of the transmission shaft matches a cross-sectional shape of the strip-shaped limiting hole.

14. The hinge apparatus according to any one of claims 1 to 13, wherein both the surface of the friction damping member and a surface of the guide slidable member that are in contact with each other are flat surfaces.

15. The hinge apparatus according to any one of claims 1 to 14, wherein the pushing member is a pushing cam, the guide slidable member is a guide cam, and the pushing member is disposed, in the axial direction of the transmission shaft, facing the guide slidable member.

16. The hinge apparatus according to any one of claims 1 to 15, wherein the swing arm assemblies are respectively disposed on the two opposite sides of the shaft cover, and the hinge apparatus further comprises the second connection member, and the guide slidable members located on the same side of the first elastic member are connected by using the second connection member in the axial direction of the transmission shaft.

17. The hinge apparatus according to claim 16, wherein the damping component further comprises the second elastic member, the second connection member is disposed, in the axial direction of the transmission shaft, on the side of the second elastic member facing the guide slidable member, and the first elastic member and the second elastic member are configured to apply force that is directed toward the pushing member to the guide slidable member.

18. An electronic device, comprising the hinge apparatus according to any one of claims 1 to 17.
